# EUROPEAN PATENT APPLICATION

(11) **EP 0 891 839 A2**
(43) Date of publication of application: **20.01.1999**
(21) Application number: 98850120.1
(22) Date of filing: 14.07.1998
(51) Int. Cl.: B25B 27/06

(54) **Device and method for axial movement of a bearing**

(30) Priority: 17.07.1997 SE 9702615
(71) Applicant: Aktiebolaget SKF, S-415 50 Göteborg (SE)
(72) Inventor: Johansson, Per-Olof, 444 65 Jörlanda (SE); Andersson, Ove, 441 96 Alingsas (SE)
(74) Representative: Westman, P. Börje I.

(57) **Abstract**

A device for axial movement of a bearing (1) on a shaft (2) comprising at least one elongated first element (5), said movement being achieved by a pulling action by said first element (5), wherein said element (5) is arranged to be inserted through the space between the inner and outer rings (6, 7) of said bearing (1) and arranged to accomplish a locking action in this position by providing a blocking section, the size of which is bigger than the space between the inner and outer rings (6, 7) of said bearing.

## Description

### TECHNICAL FIELD

The present invention relates to a device and method for axial movement of a bearing on a shaft comprising at least one elongated first element, said movement being achieved by a pulling action by said first element.

### BACKGROUND OF THE INVENTION

Axial movement of a bearing can be desired for a number of reasons, e.g. when mounting a bearing on a shaft and demounting a bearing from a shaft.

The Swedish patent 217 366 deals with the same technical problem. That patent discloses a pressure device for mounting and demounting machine elements, such as roller bearings. The pressure device is mainly based on the cooperation of two annular shaped elements, of which one can be partially inserted into the other creating a space for a pressurised medium inbetween. By controlling the pressure of said medium the force responsible for the axial movement is controlled.

### PURPOSE AND MOST ESSENTIAL FEATURES OF THE INVENTION

The purpose of the present invention is to provide a device and method for movement of a bearing. More specifically, the bearing to be axially moved is of the type having correspondingly curved longitudinal section profiles at rollers and race tracks with a radius of curvature substantially bigger than the biggest distance betweev the centre axis of the bearing and the surfaces of the race tracks, whereby the rollers are axially moveable between the race tracks without being obstructed by flanges or the like thereby allowing individual axial displacement and inclination between the race rings and the rollers. Characterizing for the present invention is that at least one elongated first element is arranged to be inserted through the space between the inner and outer rings of a bearing and arranged to accomplish a locking action in this position by providing a blocking section, the size of which is bigger than the space between the inner and outer rings of the bearing.

### DESCRIPTION OF THE DRAWINGS

Figure 1 shows a sectional view of an embodiment of a device according to the invention. This embodiment includes a ring.

Figure 2 shows a sectional view of an embodiment of a device according to the invention. This embodiment includes a means for accomplishing a locking action.

### DESCRIPTION OF TWO PREFERRED EMBODIMENTS

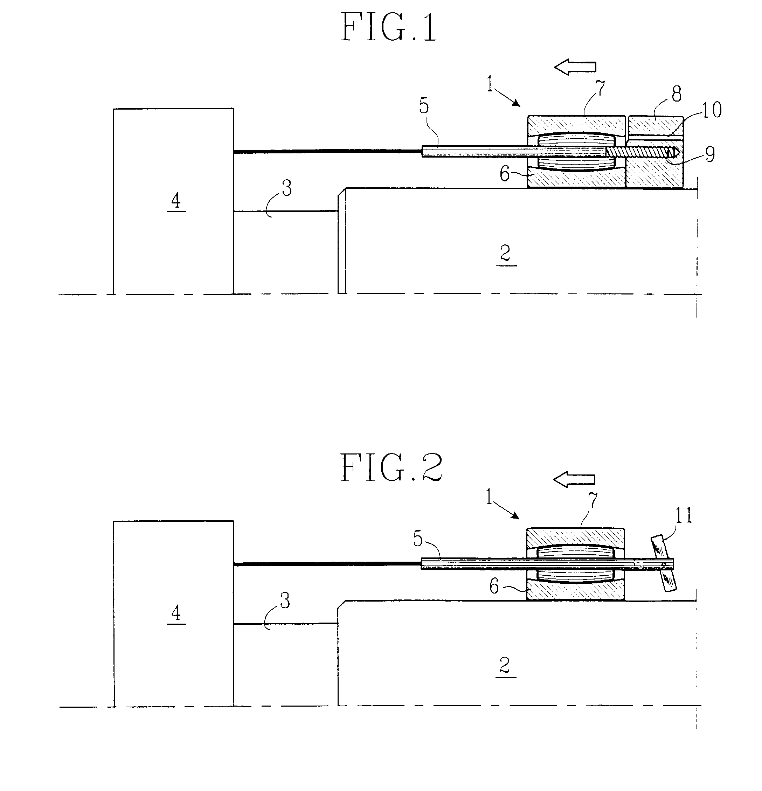

According to a first embodiment presented in figure 1, a roller bearing 1 has previously been mounted on a shaft 2. An extension element 3 is placed in contact with the shaft 2 at the end of the shaft 2. The extension element 3 is of a diameter at least not greater can the shaft 2, which facilitates for the bearing 1 to be placed on the extension element 3 as an end result of a demounting action. Thus the extension element 3 is normally only needed when a bearing is to be demounted. The width of the extension element 3 is preferably greater than the width of the roller bearing 1 to be demounted. In contact with the extension element 3 a pulling means 4 is arranged. The shaft 2, the extension element 3 and the pulling means 4 are preferably located on the same axis. When an axial movement of the bearing 1 is desired, an elongated element 5 is inserted through the space between the inner and outer rings 6, 7 of the bearing 1. It should be noted that the elongated element 5 must pass between the rollers of the roller bearing 1. Also mounted on the shaft 2 is a ring 8. The ring 8, which normally is mounted before the mounting of the roller bearing 1, is located on the opposite side of the roller bearing 1 in relation to the pulling means 4. The elongated element 5 is arranged to accomplish a locking action with the ring 8. The locking or clutching action is provided by the elongated element 5 consisting of a thread-like element, which is attachable by threaded engagement 9 (shown in figure 1) or by a previously known clutching element (not shown in figure 1) to the ring 8. The clutching element can for instance consist of a hook or an eye in combination with a suitable arrangement for engagement. The ring 8 may be provided with at least one hole 10 for allowing a flow of a fluid through the ring 8. The hole 10 can also be used for accomplishing the locking action by one or more clutching elements. The axial thickness of the ring 8 is slightly greater or smaller at its outer diameter than at its inner diameter in order not to affect the axial clearance of the bearing but the thickness variation is enough in order to load both rings 6, 7 during an axial movement.

The second embodiment, presented in figure 2, shows great similarities with the first embodiment. Therefore, only their differences will be commented below. The elongated element 5 is provided with a second element 11, which is movably arranged to facilitate a blocking action after being inserted between said inner and outer rings 6, 7.

Normally, there is a plurality of elongated elements 5 instead of the single one as suggested in the two embodiments. The pulling means 1 may be of suitable previously known type. This may require that the elongated element 5 is attached to a chain, wire or any suitable means for facilitating the pulling by the pulling means 4. It should be noted that the device according to the invention is not limited to demounting of bearings. Demounting of a bearing is a special case of an axial movement.

## Claims

1. Device for axial movement of a bearing (1) on a shaft (2) comprising at least one elongated first element (5), said movement being achieved by a pulling action by said first element (5),
**characterized in,**
that said element (5) is arranged be inserted through the space between the inner and outer rings (6, 7) of said bearing (1) and arranged to accomplish locking action in this position by providing a blocking section, the size of which is bigger than the space between the inner and outer rings (6, 7) of said bearing.

2. Device according to claim 1,
**characterized in,**
that said device is usable when demounting said bearing (1) from said shaft (2).

3. Device according to claim 1,
**characterized in,**
that said first element (5) is provided with a second element (11), which is movably arranged to facilitate a blocking action after being inserted between said inner and outer rings (6, 7).

4. Device according to claim 1,
**characterized in,**
that said first element (5) consists of a thread-like element, which is attachable by a clutching element fixed to said thread-like element or by threaded engagement (9) to a ring (8) arranged on opposite side of insertion of said first element (5).

5. Device according to claim 4,
**characterized in,**
that said ring (8) is provided with at least one hole (10) for allowing a flow of a fluid through said ring (8).

6. Device according to claim 4,
**characterized in,**
that the axial thickness of said ring (8) is slightly greater or smaller at its outer diameter than at its inner diameter.

7. Method for axially mcving a bearing (1) on a shaft (2) comprising at least one elongated first element (5),
**characterized in,**
that said element (5) is inserted through the space between the inner and outer rings (6, 7) of said bearing (1) in order to accomplish a locking action in this position by providing a blocking section, the size of which is bigger than the space between the inner and outer rings (6, 7) of said bearing (1).

8. Method according to claim 7,
**characterized in,**
that said first element (5) is provided with a second element (11), which movably facilitates a blocking action after being inserted between said inner and outer rings (6, 7).

9. Method according to claim 7,
**characterized in,**
that said first element (5) consists of a thread-like element, which is attachable by a clutching element fixed to said thread-like element or by threaded engagement (9) to a ring (8) arranged on opposite side of insertion of said first element (5).
